# EUROPEAN PATENT SPECIFICATION

(11) **EP 1 375 051 B1**
(45) Date of publication and mention of the grant of the patent: **27.09.2006**
(21) Application number: 03021059.5
(22) Date of filing: 24.05.2000
(51) Int. Cl.: B23K 20/12, B23K 31/00, B61D 17/04, E04C 2/54

(54) **A structural body for use in friction stir joining method**
Bauteil zur Anwendung in einem drehenden Reibungschweissverfahren
Corps structurel utilisé dans une méthode de fabrication par soudage par friction à mouvement cyclique

(30) Priority: 28.05.1999 JP 14913499
(43) Date of publication of application: 02.01.2004
(62) Divisional of application: 00304378.3
(73) Proprietor: Hitachi, Ltd., Chiyoda-ku, Tokyo 100-8010 (JP)
(72) Inventor: Nakamura, Hideyuki, Kudamatsu-shi Yamaguchi 744-0002 (JP); Kawasaki, Takeshi, Kudamatsu-shi Yamaguchi 744-0006 (JP); Makino, Toshiaki, Kudamatsu-shi Yamagushi 744-0062 (JP); Sagawa, Toshiaki, Yanai-shi Yamaguchi 742-0021 (JP)
(74) Representative: Paget, Hugh Charles Edward

(56) References cited:
- EP-A- 0 797 043
- JP-A- 9 221 024

## Description

The present invention relates to a hollow frame member for use in friction stir joining, when manufacturing a structural body. For example, the present invention is applicable to aluminum alloy extruded frame members. Such frame members are used in a railway car or a building structure, etc.

### Background of the Invention

Friction stir joining (or friction stir welding) is a method in which a joint is made by rotating a round rod (called rotary tool) which is inserted into a joining portion and moving the rotary tool along a joining line of for example extruded frame members, so that the friction stir joining portion is heated, softened and plastically fluidized and joined in a solid-state. The rotary tool is comprised of a small diameter portion which is inserted into the joining portion and a large diameter portion which is adjacent the small diameter portion. The small diameter portion and the large diameter portion of the rotary tool are co-axial. The boundary or shoulder between the small diameter portion and the large diameter portion of the rotary tool is inserted a little way into the joining portion. This technique is disclosed, for example, in EP-A-797043. In Fig. 9 of this document the joining of two faces of hollow extruded frame members is carried out from the side of one of the two faces. Further, a coupling member for preventing a deformation of the hollow extruded frame member is shown. Fig. 7 of this document shows outwardly projecting raised portions at the joining location of the members.

In JP-A-9-221024 there is shown a method for manufacturing a structure body of a railway vehicle in which a projecting end portion of a face plate at one side face of a hollow frame member is abutted with a projecting end portion of a face plate of another frame member and the plates are welded to each other from above. Next, opposite face plates of the two members are connected by a covering plate. This document shows in combination the features of the first part of present claim 1.

A point of difference between friction stir joining and arc welding resides in that in the friction stir joining by insertion of the rotary tool to members to be subjected to joining a large load is applied. This load acts mainly in the insertion direction of the rotary tool (axis direction of the rotary tool).

When hollow extruded frame members are subjected to friction stir joining, the insertion force acting on a rib which connects two parallel face plates may cause the hollow extruded frame members to be deformed. For these reasons, it is necessary to form a structure by which the deformation of the coupling member portion can be prevented.

To prevent such deformation EP-A-797043 shows at a joining portion of the two hollow extruded frame members a vertical transverse plate (e.g. a lengthwise rib) joining the two face plates of one or both frame members. This lengthwise rib is positioned at an extension line of the axis of the rotary tool. The lengthwise rib is connected to the two face plates of the hollow extruded frame member. Since a large load acts, it is necessary to make the plate thickness of the extruded frame member large. For this reason, there is a limitation in obtaining a lightweight structure.

Further, this lengthwise rib of the hollow extruded frame member will be studied from another aspect. When an outside bending force acts on the hollow extruded frame member, it is known that the portion dominant for the whole rigidity performance is the cross-rib. To improve the rigidity performance against outside bending force, it is desirable to arrange the cross-rib at a forty-five degree angle to the face plate, which is a main stress force direction of a shearing force. However, the lengthwise rib being perpendicular to two sheet face plates hardly contributes as a strengthening member.

### Summary of the Invention

An object of the invention is to provide hollow frame member for use in manufacture of a structural body having a lightweight structure and a high rigidity performance.

According to the invention there is provided a hollow frame member for use in friction stir joining, as set out in claim 1.

### Brief Description of the Drawings

Embodiments of the invention will now be described by way of non-limitative example with reference to the accompanying drawings, in which:-
Fig. 1 is a longitudinal cross-sectional view showing a joining portion of one embodiment of a hollow frame member 10 according to the present invention;
Fig. 2 is a diagrammatic cross-sectional view of the pair of hollow frame members of Fig. 1;
Fig. 3 is a diagrammatic perspective view of a body of a railway car to which the invention may be applied;
Fig. 4 is a diagrammatic cross-sectional view of another pair of members including another embodiment of the present invention;
Fig. 5 is a longitudinal cross-sectional view showing a joining portion in another embodiment of the present invention;
Fig. 6 is a longitudinal cross-sectional view showing a joining portion of yet another embodiment of the present invention;
Fig. 7 is a longitudinal cross-sectional view showing a joining portion of a further embodiment according to the present invention; and
Fig. 8 is a longitudinal cross-sectional view showing a joining portion of another embodiment of the present invention.

### Description of the Embodiments

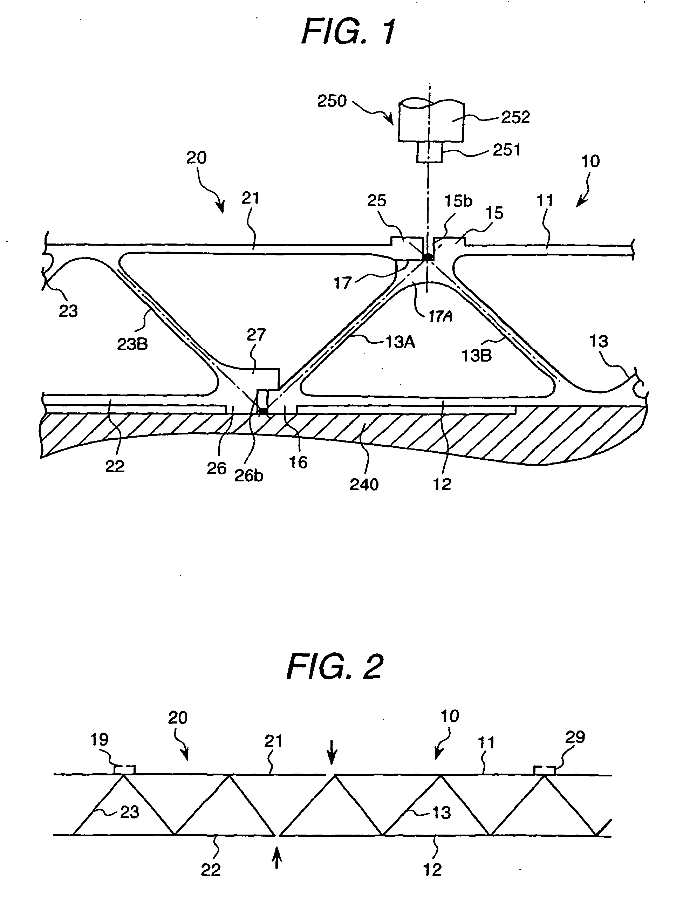

One embodiment of a hollow frame member 10 according to the present invention will be explained by Figs. 1 to 3. A car body 200 is comprised of a side structure 201, a roof structure 202, a base frame 203 and an end structure body 204. Each of the side structure 201, the roof structure 202, and the base frame 203 is constituted by joining plural extruded frame members. The longitudinal direction of these extruded frame members is in the longitudinal direction of the car body 200. The extruded frame member is a hollow frame member made of an aluminum alloy.

Hollow extruded frame members 10 and 20 of the side structure body 201 will be explained. Other portions of the side structure and other body structures are similar.

The hollow frame members 10 and 20 are each comprised of two sheet face plates 11, 12 and 21, 22 and plural truss ribs 13 and 23. The two sheet face plates 11 and 12 (and likewise the two sheet face plates 21 and 22) are substantially parallel. The pitch of the truss formed by ribs 13 and 23 is the same. The truss is constituted by the ribs 13 and 23 and a center line of a plate thickness of the face plates 11 and 12 and the face plates 21 and 22. An apex exists at a side of the face plates 11 and 12 and the face plates 21 and 22. The apex is shown by a filled circle.

At a vicinity of the apex of the truss at the inner side of the railway car, installing rails 19 and 29 are provided integrally. The rails 19 and 29 are comprised of two L shape members, and are used for installing the parts and apparatus such as interior mounting sheets and seats, etc.

The constitution of the joint of the hollow extruded frame members 10 and 20 will now be explained. At an end portion of the hollow frame member 10, there is a rib 13A which constitutes one side of the truss, the end portion of the face plate 12 is projected laterally further, towards the adjacent member 20, than the end portion of the face plate 11. The rib 13A connects the end of the face plate 11 with the end of the face plate 12. A rib 13B connects the end of the face plate 11 and an intermediate point of the face plate 12. By the ribs 13A and 13B, an isosceles triangle truss shape is constituted. Each adjacent pair of ribs 13 likewise defines an isosceles triangle truss shape.

The end portion of the face plate 21 of the hollow frame member 20 projects further laterally, towards the adjacent hollow frame member 10, than the end portion of the face plate 22. There is no rib directly connecting the ends of the face plates 21 and 22.

An inner side of the end portion of the face plate 21 overlaps and lies on a seat 17 which is projected from the rib 13A. The seat 17 is provided at the thickening or rib 17A which is provided in the vicinity of the cross-point of the ribs 13A and 13B. An inner side of the end portion of the face plate 12 overlaps and underlies a seat 27 which projects from the end portion of the face plate 22.

When the two hollow frame members 10 and 20 are abutted as seen in Fig. 1, an isosceles triangle truss shape is constituted by the ribs 13A, 23B and the face plate 21. The dimension of this truss shape is the same as that of the other truss shapes.

Raised portions 15, 25, 16, 26 are provided at the outer faces of the abutted portions and all have the same height and width. These abutted portions are subjected to friction stir joining. Plate thickness of the ribs 13A, 13B and 23B is greater than that of other ribs 13 and 23. The abutment faces are on vertical lines (lines normal to the face plates) at the apex of the truss shapes which are constituted by the ribs 13A, 13B and 23B and the plate faces 12 and 22. From the view point of accuracy of positioning of the rotary tool 250, in practice the axis of the rotary tool 250 is positioned at a vertical line or plane in the vicinity of the apex of the truss shape.

The hollow frame members 10 and 20 are mounted on a bed 240 with the face plates 12 and 22 downward. From the upper side, the rotary tool 250 is inserted into the joint portion and the friction stir joining is carried out.

Abutted faces 15b and 26b of the raised portions 15, 25, 16, 26 are perpendicular to the plate faces 11 and 22. A recessed or reentrant portion is constituted by the vertical faces 15b and 26b and horizontal faces of the seats 17 and 27. This recessed portion is opened to a face along to the face plates 11 and 22 and an end portion side of the hollow frame members 10 and 20.

The abutted faces 15b and 26b are orthogonal to the face plates 11 and 12 and the face plates 21 and 22. Namely, the abutted faces extend along to a normal line of the face plates. The abutted faces 15b and 26b extend in the thickness direction of the hollow frame members 10 and 20.

As Fig. 1 shows, the abutted faces 15b and 26b are positioned in each case toward the opposite end portion of the respective hollow frame member 10, 20 from the normal line which passes through the apex of the truss shape. In a case where the abutted faces 15b, 26b lie on the normal line which passes through the apex of the truss shape, and in a case where the end portions of other face plates 21 and 12 are short (within an allowable error), the insertion position of the rotary tool 250 approaches toward other face plates side. In this case, there is a possibility that the load on the rib at the approached side becomes excessive. If the widths of the two raised portions 15 and 25 (16 and 26) are detected, then the axis of the rotary tool 250 is consistent with the center.

The manufacturing method of this structure body will be explained. The hollow frame members 10 and 20 are mounted on and fixed to the bed 240. The abutted portion of the end portions of the face plates 11 and 21 (the face plates 12 and 22) are contacted or approached to each other. The raised portions 15 and 25 of the abutted portion of the upper face side face plates 11 and 21 are temporarily fixed by arc welding from above. The temporary welding is carried out intermittently.

The raised portions 16 and 26 contact the bed 240. A vicinity of a cross-point between the rib 13B and the face plate 12 is mounted on the bed 240.

In this condition, the rotary tool 250 of a friction stir joining apparatus is inserted from the upper side into the abutted portion of the raised portions 15 and 25 and is moved along the joining line to carry out the friction stir joining. The axis of the rotary tool 250 is in a vertical plane. However, the axis is inclined relative to the advancing direction of the rotary tool 250, as already known. The width position of the two raised portions 15, 25 is detected and the axis of the rotary tool 250 is positioned at their center.

The rotary tool 250 comprises a large diameter portion 252 and a small diameter portion 251 at a tip end of the large diameter portion 252. The tip end of the small diameter portion 251 of the rotary tool 250 is inserted deeply from the upper face of the seat 17. The lower end of the large diameter portion 252 of the rotary tool 250 is positioned at a level between the top surfaces of the raised portions 15 and 25 and the outer faces of the face plates 11 and 21. The diameter of the large diameter portion 252 of the rotary tool 250 is smaller than the combined width of the two raised portions 15 and 25. The small diameter portion 251 of the rotary tool 250 may have a screw shape.

By this friction stir joining a clearance between the abutted portion of the face plates 11 and 12 is buried and joined.

Next, this structural body is reversed (turned over) and mounted again on the bed 240. At the upper side of the raised portions 16 and 26 temporary fixing is again carried out by arc welding. Next, friction stir joining is carried out, from the upper side of the raised portions 16 and 26 by the rotary tool 250, in the same manner as above.

Finally, the residual raised portion on the outer face side of the railway car body 200 is cut off and made flush with the face of the face plate.

In this process, the axis of the rotary tool 250 is at the apex of the truss shape formed by the two ribs 13A and 13B (the ribs 13A and 23B) or on the vertical linear line which passes the vicinity of the apex. The insertion force during the friction stir joining is supported by the two ribs 13A and 13B (13A and 23B). For this reason, the bending of the ribs 13A, 13B and 23B can be restrained. The plate thickness of the ribs 13A, 13B and 23B can be thin and a lightweight structure can be obtained. Likewise, the bending of the face plates 11 and 12 can be restrained. The plate thickness of the ribs 13A, 13B and 23B is thicker than the plate thickness of other ribs 13 and 23.

By use of the bed 240 for supporting the ribs 13A, 13B and 23B, the bending of the face plate can be prevented.

Further, after the friction stir joining, the whole structure body formed is constituted substantially as a truss structure. For this reason, the outer face bending rigidity performance can be improved and a lightweight structure can be obtained.

The apex of the two ribs 13A and 13B (two ribs 13A and 23B) may be positioned at the outer face side of the face plates 11 and 21.

The joints in the above method are carried out by friction stir joining, but alternatively one or both of the joints may be carried out by arc welding. In the case of arc welding, since there is no load during the joining, the ribs 13A, 13B and 23B can be made thin. The upper face of the seat 17 and the lower face of the seat 27 may be inclined.

In Fig.1, the face plates 11 and 12 and the face plates 21 and 22 are parallel, but an alternative is possible where one of the face plates is inclined to the other face plate.

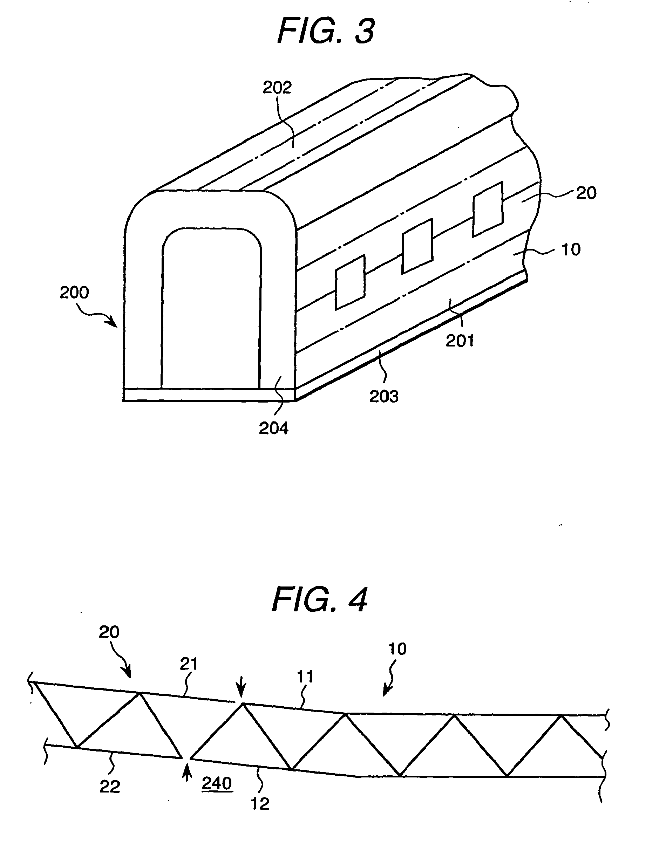

Fig. 4 shows a further structure in which the normal line of the face plate of the joining portion is inclined to the vertical. One end of the hollow frame member 10 is horizontal. The hollow frame members 10 and 20 are mounted on the bed 240. This causes easily to the joining line of the end portion of the side structure body 201. The axis of the rotary tool 250 for the friction stir joining is along the normal line to the face plate. This normal line passes through the vicinity of the apex of the truss. An arrow mark shows the position and the direction of the rotary tool 250.

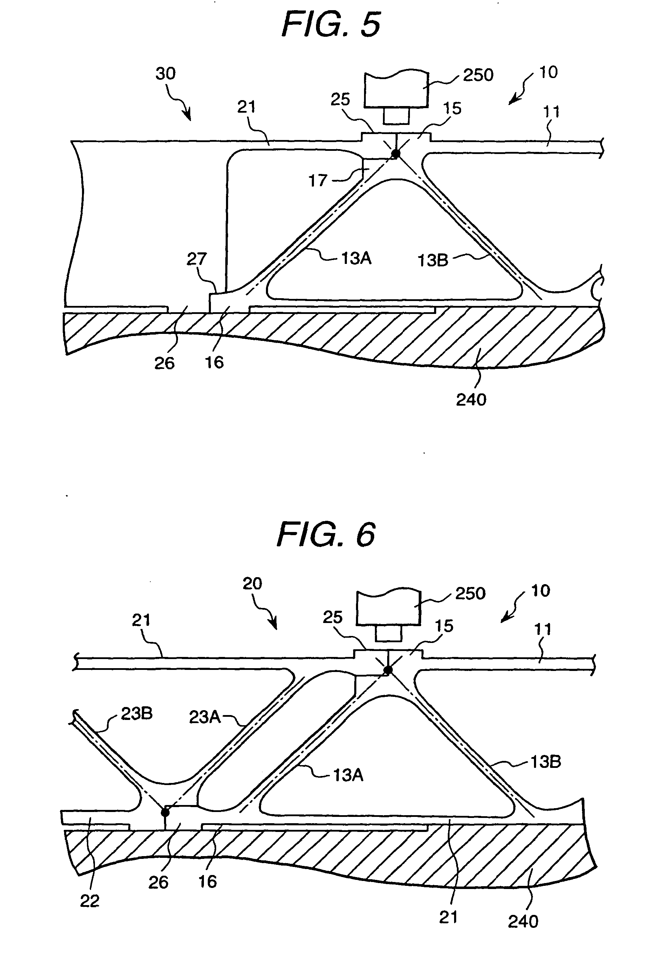

Fig. 5 shows a further construction in which one frame member is a block shape member 30. This member 30 may or may not be hollow. Other parts in this Figure are similar to those of the structure shown in Fig. 1. In a case where the member 30 is a hollow frame member, the seat 27 is provided at a rib connecting the raised portion 26 and the face plate 21. This rib is substantially orthogonal to the face plate 11 (along the normal line to the face plate). The face plate 21 lies substantially in the extension line of the face plate 11.

In the hollow frame member 20 shown in Fig. 1 there is no rib connecting the end portion of the face plate 21 to the end portion of the face plate 22. On the other hand, at the end portions of the face plates there are the raised portions 25 and 26. For this reason, the manufacture of the raised portion 25 is difficult. An aim of the construction shown in Fig. 6 is to improve this.

There is a rib 23A connecting the end portion of the face plate 21 and the end portion of the face plate 22. An isosceles triangle is formed according to the ribs 23A and 23B and the face plate 21. With this structure, the insertion force of the tool is supported by the two ribs 23A and 23B. The plate thickness of the ribs 13A, 13B, 23A and 23B can be made thin. After the manufacture of the hollow frame member 20, the rib 23A can be removed, after which as shown in Fig. 1 the friction stir joining can be carried out.

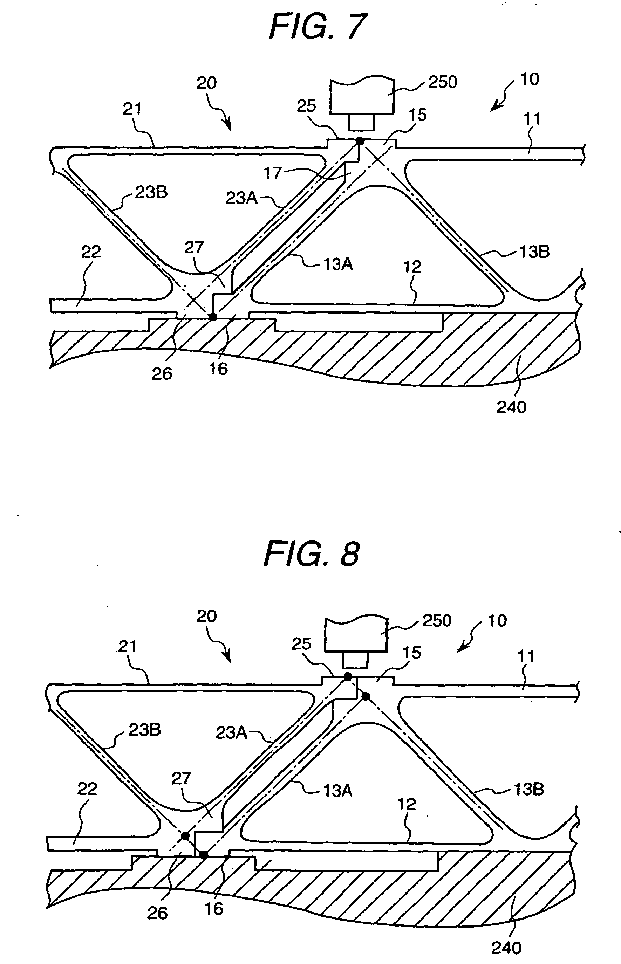

Fig. 7 shows a further construction in which the rib 23A approaches to the end portion of the hollow frame member. An isosceles triangle is constituted by the center line of the rib 23A and the center line of the rib 13B. The axis of the rotary tool 250 is at the vertical linear line which passes through the cross-point of these two center lines. According to this structure, the insertion force can be supported by the three ribs.

Fig. 8 shows a further construction in which the insertion position of the rotary tool 250 is between two cross-points.

With the present invention, since the vicinity of the apex of the two ribs for connecting two sheet face plates forms the joining portion, a lightweight structure and a high rigidity performance structure body can be provided.

## Claims

1. A hollow frame member (10, 20) for use in friction stir joining, comprising:
two sheet face plates (11, 12, 21, 22) connected in a truss manner by plural ribs;
wherein at one side edge of said hollow frame member an end portion of a first one (12, 21) of said face plates projects further than an end portion of the second one (11, 22) of said face plates at said side edge of the member; and
said end portion of said second face plate (11) is joined to said end portion of said first face plate (12) by a first oblique rib (13A) of said truss and is joined to said first face plate (12) at a location spaced from said end portion (12) of said first face plate by a second oblique rib (13B) of said truss, so that said first and second oblique ribs (13A, 13B) form an apex of said truss at said end portion of said second face plate (11);
**characterised in that**
said hollow frame member (10, 20) has a thickened portion (17a), thicker than said first and second face plates (11, 12), at the junction of said second face plate (11) and said first and second ribs (13A, 13B) of said truss;
said thickened portion (17a) includes a raised portion (15, 26) standing up outwardly from the second face plate (11, 22) at a vicinity of said apex of said truss at said end portion of said second face plate; and
said thickened portion (17a) has a re-entrant formed by a first surface facing outwardly from said second face plate and a second surface (15b) facing in the extension direction of said second face plate, said second surface (15b) being at an edge of said raised portion (15, 26) and being positioned towards the other side edge of the hollow frame member from the normal line which passes through said apex of said truss.

2. A hollow frame member according to claim 1, wherein said surface of said re-entrant facing outwardly of said second face plate is aligned with said apex.

3. A hollow frame member according to claim 1 or 2, wherein a raised portion (16, 25) standing up outwardly from said first face plate (12, 21) is provided at said end portion of said first face plate.

## Patentansprüche

1. Hohles Rahmenelement (10, 20) zur Verwendung beim Reibrührschweißen, umfassend
zwei durch mehrere Rippen in Fachwerksart verbundene Flach-Deckplatten (11, 12, 21, 22),
wobei ein Endabschnitt einer ersten (12, 21) der Deckplatten bei einer Seitenkante des hohlen Rahmenelements weiter als ein Endabschnitt der zweiten (11, 22) der Deckplatten bei der Seitenkante des Elements hervorragt, und
der Endabschnitt der zweiten Deckplatte (11) mit dem Endabschnitt der ersten Deckplatte (12) mittels einer ersten schrägen Rippe (13A) des Fachwerks verbunden ist und mit der ersten Deckplatte (12) an einer Stelle in einem Abstand vom Endabschnitt (12) der ersten Deckplatte mittels einer zweiten schrägen Rippe (13B) des Fachwerks verbunden ist, so daß die erste und die zweite schräge Rippe (13A, 13B) einen Scheitelpunkt des Fachwerks am Endabschnitt der zweiten Deckplatte (11) bilden,
**dadurch gekennzeichnet, daß**
das hohle Rahmenelement (10, 20) an der Verbindungsstelle der zweiten Deckplatte (11) und der ersten und der zweiten Rippe (13A, 13B) des Fachwerks einen verdickten Abschnitt (17a) aufweist, der dicker als die erste und die zweite Deckplatte (11, 12) ist,
wobei der verdickte Abschnitt (17a) einen erhabenen Abschnitt (15, 26) enthält, der in der Nähe des Scheitelpunkts des Fachwerks am Endabschnitt der zweiten Deckplatte von der zweiten Deckplatte (11, 22) nach außen hervorsteht, und
wobei der verdickte Abschnitt (17a) einen einspringenden Abschnitt aufweist, der durch eine erste von der zweiten Deckplatte nach außen zeigende Fläche und eine in der Verlängerungsrichtung der zweiten Deckplatte zeigende zweite Oberfläche (15b) gebildet wird, wobei die zweite Fläche (15b) an einer Kante des erhabenen Abschnitts (15, 26) liegt und von der Normalenlinie, die durch den Scheitelpunkt des Fachwerks läuft, zur anderen Seitenkante des hohlen Rahmenelements hin angeordnet ist.

2. Hohles Rahmenelement nach Anspruch 1, wobei die Fläche des einspringenden Abschnitts, die von der zweiten Deckplatte nach außen zeigt, am Scheitelpunkt ausgerichtet ist.

3. Hohles Rahmenelement nach Anspruch 1 oder 2, wobei ein erhabener Abschnitt (16, 25), der von der ersten Deckplatte (12, 21) nach außen hervorsteht, am Endabschnitt der ersten Deckplatte vorgesehen ist.

## Revendications

1. Elément de châssis creux (10, 20) pour une utilisation dans une soudure par friction-malaxage, comprenant :
deux plaques frontales en feuille (11, 12, 21, 22) connectées en treillis par plusieurs nervures (13, 23) ;
dans lequel à un premier bord latéral dudit élément de châssis creux, une partie d'extrémité d'une première (12, 21) desdites plaques frontales fait saillie davantage qu'une partie d'extrémité de la seconde (11, 22) desdites plaques frontales audit bord latéral de l'élément ; et
ladite partie d'extrémité de ladite seconde plaque frontale (11) est réunie à ladite partie d'extrémité de ladite première plaque frontale (11) par une première nervure oblique (13A) dudit treillis et est réunie à ladite première plaque frontale (12) à un endroit espacé de ladite partie d'extrémité de ladite première plaque frontale par une seconde nervure oblique (13B) dudit treillis, de sorte que lesdites première et seconde nervures obliques (13A , 13B) forment un sommet dudit treillis dans ladite partie d'extrémité de la seconde plaque frontale (11) ;
**caractérisé en ce :**
**que** ledit élément de châssis creux (10, 20) a une partie épaissie (17a), qui est plus épaisse que lesdites première et seconde plaques frontales (11, 12) à la jonction de ladite seconde plaque frontale (11) et desdites première et seconde nervures (13A, 13B) dudit treillis ;
ladite partie épaissie (17a) comprend une partie rehaussée (15, 26) qui se dresse vers l'extérieur depuis la seconde plaque frontale (11, 22) à proximité dudit sommet dudit treillis dans ladite partie d'extrémité de ladite seconde plaque frontale; et
ladite partie épaissie (17a) comprend une partie rentrante formée par une première surface faisant face vers l'extérieur à partir de ladite seconde plaque frontale et une seconde surface (15b) qui est dirigée dans la direction de prolongement de ladite seconde plaque frontale, ladite seconde surface (15b) se trouvant au niveau d'un bord de ladite partie rehaussée (15, 26) et étant disposée vers l'autre bord latéral dudit élément de châssis creux à partir de la ligne normale qui passe par ledit sommet dudit treillis.

2. Elément de châssis creux selon la revendication 1, dans lequel ladite surface de ladite partie rentrante faisant face vers l'extérieur à partir de ladite seconde plaque frontale est alignée avec ledit sommet.

3. Elément de châssis creux selon la revendication 1 ou 2, dans lequel une partie rehaussée (16, 25) qui se dresse vers l'extérieur depuis la première plaque frontale (12, 21) est prévue dans ladite partie d'extrémité de ladite première plaque frontale.
